# EUROPÄISCHE PATENTSCHRIFT

(11) **EP 3 819 659 B1**
(45) Veröffentlichungstag und Bekanntmachung des Hinweises auf die Patenterteilung: **19.11.2025**
(21) Anmeldenummer: 20187385.8
(22) Anmeldetag: 23.07.2020
(51) Int. Cl.: G01S 7/00, H04W 84/18, F41G 9/00, F41G 3/04, F41G 3/02, G06T 7/70, F41G 7/22, G01S 13/66, G01S 7/41, F41H 11/02, G06V 20/52

(54) **KOMMUNIKATIONSMODUL FÜR KOMPONENTEN TAKTISCHER LUFTVERTEIDIGUNGSSYSTEME**
COMMUNICATION MODULE FOR COMPONENTS OF TACTICAL AIR CONDITIONING SYSTEMS
MODULE DE COMMUNICATION POUR COMPOSANTS DE SYSTÈMES DE DÉFENSE AÉRIENNE TACTIQUE

(30) Priorität: 08.11.2019 DE 102019007779
(43) Veröffentlichungstag der Anmeldung: 12.05.2021
(73) Patentinhaber: MBDA Deutschland GmbH, 86529 Schrobenhausen (DE)
(72) Erfinder: GRABMEIER, Michael, 83022 Rosenheim (DE); MAMIER, Lothar, 82281 Egenhofen (DE); GROSSMANN, Florian, 85077 Manching (DE)
(74) Vertreter: Isarpatent

(56) Entgegenhaltungen:
- EP-A1- 3 493 107
- WO-A1-2012/112756
- US-A1- 2017 061 249

## Beschreibung

### TECHNISCHES GEBIET DER ERFINDUNG

Die Erfindung betrifft Kommunikationsmodule für Komponenten taktischer Luftverteidigungssysteme, insbesondere für die Integration in funktionelle verteilte Komponenten eines derartigen taktischen Luftverteidigungssystems, sowie Verfahren zur Kommunikation zwischen Komponenten taktischer Luftverteidigungssysteme.

### TECHNISCHER HINTERGRUND

Taktische Luftverteidigungssysteme, LVS, als Element der integrierten Luftverteidigung bieten einen Nah- und Nächstbereichsschutz gegen Bedrohungen aus der Luft. LVS gewährleisten hochmobilen Begleitschutz sowie unmittelbare Feuerbereitschaft als eines von mehreren Elementen der integrierten Luftverteidigung. LVS verwenden häufig eine einheitliche Systemarchitektur zur Anbindung von Sensoren und Effektoren, die auch eine sichere Aufklärung und Bekämpfung aktueller Bedrohungen durch taktische ballistische Flugkörper (TBM) und luftatmende Ziele (ABT) sowie durch Klein- und Kleinstziele gewährleistet.

Ein Baustein einer leistungsfähigen Systemarchitektur eines LVS sind optische Sensoren wie etwa CCD-Bildsensoren als Tagsichtgeräte, vorwärts gerichtete multispektrale Infrarot- bzw. Wärmebildkameras ("Forward Looking Infrared", FLIR) als Nachtsichtgeräte, Radarsensoren, optronische Sensoren oder andere Sensortypen, um Beobachtungsdaten für eine Detektion, Klassifikation und Identifikation von potentiellen Zielobjekten des LVS zu ermöglichen.

Ein komplexes, verteiltes militärisches System wie ein taktisches LVS mit vielen unterschiedlichen Netzwerkknoten wie Startgeräte, Sensoren, Gefechtsstände etc. kommuniziert üblicherweise über ein taktisches Funknetz. Naturgemäß werden dabei große bis sehr große Datenmengen durch die oben genannten LVS-Sensoren erzeugt, die für die Verarbeitung durch Klassifikations- und Identifikationsmethoden der "schwachen" KI (künstliche neuronale Netze, Deep Learning) grundsätzlich geeignet sind.

Diese Methoden haben sich in zivilen Anwendungen in schmalen und klar abgegrenzten Anwendungsbereichen als äußerst effektiv erwiesen, beispielsweise bei der Objekterkennung von Bildinhalten, Videoinhalten oder Radarsignaturen, aber auch bei der Anomalie-Erkennung und der Vorhersage von Schadensverhalten im Rahmen der prädiktiven Instandhaltung. Voraussetzung hierfür sind die in LVS-Sensoren integrierte Inferenz-Maschinen, beispielsweise wie in DE 10 2017 011 108 A1 offenbart, die mittels Trainings- und Verifikationsdaten trainiert und verifiziert werden, wobei diese Datensätze für das überwachte Lernen aus sensierten Sensorrohdaten (VIS/IR-Bild, Bildersequenz, Radar-Profile etc.) und zugeordneten Identitätsinformationen (Flugobjekttyp, Position, Geschwindigkeit und Orientierung des Flugobjektes im Raum, Position und Identifikator des vermessenden Sensorsystems etc.) bestehen. Diese für das überwachte Lernen erforderliche Zuordnung wird als Annotation bezeichnet. Für den militärischen Bereich der integrierten Luftverteidigung ist bislang unbekannt, wie und wo die notwendigen Trainings- und Verifikationsdaten für ein taktisches LVS erzeugt, gespeichert und aufbereitet werden sollen und in welchem Kontext das Belernen der operationellen Inferenz-Maschinen der LVS-Sensoren erfolgen soll.

In komplexen Systemen wie LVS werden Datenaufzeichnungssysteme (Data Logging Subsystems) eingebaut, welche systemeigene Daten wie beispielsweise Sensorrohdaten erfassen, aufzeichnen, archivieren und weiterleiten können. Eine derartige Datenaufzeichnung und -archivierung ermöglicht unter anderem eine Vor-Ort-Fehleranalyse und Diagnose von potentiellen Fehlverhalten des LVS zur Steigerung der technischen Verfügbarkeit, fundierten Analyse von ausgeführten Missionen, sowie verlässliche Vorhersagen der Verfügbarkeit und des Wartungsbedarfs des LVS. Außerdem kann eine Überwachung von Systemereignissen erfolgen, um Eindring- und Manipulationsversuche in die Rechner- und Netzinfrastruktur des LVS rechtzeitig erkennen und abwehren zu können.

Datenaufzeichnungssysteme weisen üblicherweise einen einzelnen, zentralen Aufzeichnungsserver sowie einen dem Aufzeichnungsserver zuliefernden Aufzeichnungsclient je IT-Sicherheitsdomäne auf. Für die Speicherung und Distribution der aufzuzeichnenden Daten werden in der Regel Standardprotokolle wie etwas Syslog (RFC 5424) oder SNMP (RFC 3410) verwendet, um Teilsysteme kompatibel zueinander zu halten. Die aufzuzeichnenden Daten können je nach eingestellter Konfiguration etwa Betriebsinformationen, Hinweise, Warnungen, Alarme, IT-Sicherheitsereignisse, nicht-kritische oder kritische Fehlerabbilder, Notfallfehlerbilder, Bedienereingaben, taktische Ereignisse oder Debug-Informationen sowie Sensorrohdaten aufweisen.

Aufzuzeichnende Daten können beispielsweise temporär in einem Ringspeicher abgelegt werden, von wo aus sie selektiv in einen vor einem Überschreiben geschützten Archivspeicher überführt werden können. Die Konfiguration der Datenaufzeichnungssysteme kann vor Ort oder via Fernzugriff über ein externes Konfigurationsgerät erfolgen.

### ZUSAMMENFASSUNG DER ERFINDUNG

Es besteht der Bedarf an Möglichkeiten der Generierung und Speicherung von für das überwachte Belernen von operationellen LVS-Inferenz-Maschinen erforderlichen Trainings- und Verifikationsdaten. Eine der Aufgaben der Erfindung besteht deshalb darin, Sensorrohdaten im Grund- und Einsatzbetrieb des LVS zu sammeln, mittels der Sensorrohdaten vermessene Flugobjekte zu klassifizieren, dadurch die Sensorrohdaten mit Identitätsinformationen zu annotieren und die so annotierten Sensorrohdaten unter Wahrung der nationalen Hoheit dauerhaft für eine spätere Verwendung als Trainings- und Verifikationsdaten zu speichern.

Somit stellt die Erfindung eine wesentliche Funktionalitätserweiterung eines LVS dar, die die Voraussetzung dafür ist, dass sich die maschinelle Objektklassifikations- und Objektidentifikationsleistung der LVS-Sensoren durch immer wieder aktualisierte und raffiniertere Trainings- und Verifikationsdaten erhöhen lässt, was ebenso zu einer sich schrittweise verbessernden CDI-Fusionsfunktion des Gefechtsstandes führen dürfte (CDI = "Classification, Discrimination, Identification").

Diese und andere Aufgaben werden durch ein Sensorsystem mit den Merkmalen des Anspruchs 1, ein Luftverteidigungssystem (LVS) mit den Merkmalen des Anspruchs 5, sowie ein Verfahren zur Kommunikation zwischen Komponenten taktischer Luftverteidigungssysteme mit den Merkmalen des Anspruchs 7 gelöst.

Gemäß einem ersten Aspekt der Erfindung umfasst ein Sensorsystem für ein taktisches Luftverteidigungssystem einen Netzwerkswitch, ein oder mehrere mit dem Netzwerkswitch gekoppelte Sensorikmodule, welche dazu ausgelegt sind, Sensorrohdaten zu erfassen und an den Netzwerkswitch weiterzuleiten, ein oder mehrere mit dem Netzwerkswitch gekoppelte Inferenz-Maschinen, welche dazu ausgelegt sind, Objekte in den erfassten Sensorrohdaten zu klassifizieren und zu identifizieren, und ein Kommunikationsmodul, welches mit dem Netzwerkswitch gekoppelt ist. Das Kommunikationsmodul weist einen Modulprozessor, welcher dazu ausgelegt ist, Daten mit einem Netzwerkswitch einer Komponente eines taktischen Luftverteidigungssystems auszutauschen, eine Drahtloskommunikationsvorrichtung, welche mit dem Modulprozessor gekoppelt ist und welche dazu ausgelegt ist, drahtlose Datensignale in ein Drahtlosnetzwerk des taktischen Luftverteidigungssystems zu senden und aus dem Drahtlosnetzwerk des taktischen Luftverteidigungssystems zu empfangen, eine Kryptierungsvorrichtung, welche zwischen dem Modulprozessor und der Drahtloskommunikationsvorrichtung gekoppelt ist und welche dazu ausgelegt ist, aus dem Drahtlosnetzwerk des taktischen Luftverteidigungssystems empfangene Datensignale zu entschlüsseln und an den Modulprozessor zu leiten und von dem Modulprozessor empfangene Datensignale zu verschlüsseln und an die Drahtloskommunikationsvorrichtung zum Versenden in das Drahtlosnetzwerk des taktischen Luftverteidigungssystems zu leiten, sowie ein in das Kommunikationsmodul integriertes Datenaufzeichnungssubsystem auf, welches mit dem Modulprozessor gekoppelt und dazu ausgelegt ist, den von den ein oder mehreren Sensorikmodulen erfassten Sensorrohdaten Identitätsinformationen von den Inferenz-Maschinen klassifizierter und identifizierter Objekte für eine Annotation zuzuordnen und die annotierten Sensorrohdaten als Trainings- und Verifikationsdaten für ein überwachtes Belernen der Inferenz-Maschinen zu speichern.

Gemäß einem zweiten Aspekt der Erfindung umfasst ein ein Luftverteidigungssystem einen Gefechtsstand sowie eines oder mehrere Radarsensorsysteme oder optronische Sensorsysteme gemäß dem ersten Aspekt der Erfindung.

Gemäß einem dritten Aspekt der Erfindung umfasst ein Verfahren zur Kommunikation zwischen Komponenten taktischer Luftverteidigungssysteme, insbesondere zur automatischen Annotation und Speicherung von erfassten Sensorrohdaten, die Schritte
- der Generierung einer Luftlage im Gefechtsstand, gespeist aus einem oder mehreren von Überwachungsradaren, externen Radarsystemen, einem übergeordneten Gefechtsstand via taktischem Datenlink und einer zivilen Flugsicherungsinstanz,
- der Auswahl eines Zielplots der generierten Luftlage anhand einer Vielzahl von vorkonfigurierbarer Auswahlkriterien, welche Klasse und/oder Typ eines Luftobjektes, Entfernungsbereich, Höhenbereich über Grund, Geschwindigkeitsbereich, Richtungssektor und/oder Zeitbereich umfassen,
- der Zuweisung des ausgewählten Zielplots an ein erstes Sensorsystem von mindestens zwei Sensorsystemen des Luftverteidigungssystems mittels eines Zuweisungs-Kommandos und eines zugehörigen Suchvolumens über ein taktisches Funknetz des Luftverteidigungssystems,
- der Ermittlung und Verfolgung des ausgewählten Zielplots durch das erste Sensorsystem und der Übermittelung der Zieldaten des ausgewählten Zielplots an den Gefechtsstand,
- der Ermittlung von Identitätsinformationen des ausgewählten Zielplots durch das erste Sensorsystem oder ein zweites Sensorsystem oder den Gefechtsstand oder die Flugsicherungsinstanz oder den übergeordneten Gefechtsstand,
- des Weiterleitens der ermittelten Identitätsinformationen an den Gefechtsstand und an das erste Sensorsystem,
   - gegebenenfalls bei Vorliegen der Identitätsinformationen der Aktivierung der Vermessung durch den Gefechtsstand und Vermessung der Sensorrohdaten durch das Sensorsystem,
- der Annotation, innerhalb des ersten Sensorsystems, von erfassten Sensorrohdaten des ersten Sensorsystems durch Zuordnen der ermittelten Identitätsinformationen zu den erfassten Sensorrohdaten, und
- der Speicherung der annotierten Sensorrohdaten in einem in einem Kommunikationsmodul des ersten Sensorsystems integrierten Datenaufzeichnungssubsystem als Trainings- und Verifikationsdaten für ein überwachtes Belernen von Inferenz-Maschinen des ersten Sensorsystems.

Eine wesentliche Idee der Erfindung sind die in das taktische LVS integrierte und im LVS-Betrieb automatisierte Annotation von Sensorrohdaten und die Speicherung der so annotierten Sensorrohdaten als Trainings- und Verifikationsdaten, wobei Annotation und Speicherung Voraussetzungen des überwachten Lernens sind, beispielsweise mittels des Verfahrens der Backpropagation.

Eine weitere Idee der Erfindung besteht darin, in den essentiellen Teilsystemen eines taktischen Luftverteidigungssystems das Datenaufzeichnungssubsystem im jeweils zugehörigen Kommunikationsmodul zu lokalisieren und darin zu integrieren. Dies hat den Vorteil, dass im Kommunikationsmodul, in dem ohnehin alle relevanten Daten zusammenlaufen, wie etwa Eingabe- und Ausgabesignale des jeweiligen Teilsystems von bzw. zum taktischen Funknetz des taktischen Luftverteidigungssystems, auch die entsprechende Aufzeichnung von Eingabeund Ausgabedaten des Teilsystems erfolgen kann.

Eine weitere Idee der Erfindung ist, dass in das Kommunikationsmodul der essentiellen Teilsysteme eines taktischen Luftverteidigungssystems ein ADS-B-Empfänger und/oder ein Sekundärradarabfragegerät integriert ist bzw. sind, die bei kooperativen Flugobjekten die Identität und weitere Statusinformationen eines Flugobjektes feststellen können.

Das Kommunikationsmodul ist als Knotenzelle des taktischen Funknetzes in allen essentiellen Teilsystemen integriert und wird vom Generalunternehmer des taktischen Luftverteidigungssystems entwickelt, gewartet und weiterentwickelt, so dass die Hoheit insbesondere über die Software und die eingesetzten Kommunikationsprotokolle erreicht und erhalten werden kann. Dadurch wird die Kommunikation von der Hardware und Software der eingesetzten elektronischen Systeme wie Radarsensorik bzw. Optronik von Sensorsystemen in vorteilhafter Weise entkoppelt.

Einer der großen Vorteile der Erfindung ist es, dass das Sammeln und Annotieren von Sensorrohdaten beispielsweise von Radar-Profilen (beispielsweise HRR ("high range resolution profiling"), JEM ("jet engine modulation profiling"), HRRP-JEM (kombiniertes HRR/JEM)) und VIS/IR-Bildern bzw. Bildsequenzen in die Sensorsysteme des LVS selbst integriert sind und dass dadurch die Verwendung von leistungsfähigen künstlichen neuronalen Netzwerken (KNN) für die operationelle Klassifikation und Identifikation von Zielobjekten durch in die Sensorsysteme integrierte Inferenz-Maschinen ermöglicht wird ohne auf externe Zulieferungen bzw. auf externe Organisationen angewiesen zu sein. Zudem wird die breitbandige Übertragung von Sensorrohdaten über das taktische Funknetz in den Gefechtsstand zum Zwecke der Annotation vermieden.

Ein weiterer Vorteil ist es, dass sich die jeweiligen Teilsysteme eines taktischen Luftverteidigungssystems bei der Annotation gegenseitig unterstützen können, da die Identitätsinformationen eines Flugobjektes, die ein zweiter Sensor ermittelt, an einen ersten Sensor, der das Flugobjekt mittels Sensorrohdaten (Radar-Profilen bzw. VIS/IR-Bildern oder Bildsequenzen) vermisst, über das taktische Funknetz des LVS unmittelbar im Zusammenhang mit der Vermessung des ersten Sensors gesendet werden kann, so dass die Annotation und Speicherung der annotierten Sensorrohdaten als Trainings- und Verifikationsdaten unverzüglich im Kommunikationsmodul des ersten Sensors erfolgen kann.

Die gespeicherten und annotierten Sensorrohdaten können als Trainings- und Verifikationsdaten von den einzelnen Sensoren in ein zentrales Datencenter des LVS überführt werden, wo sie abgelegt werden. Im zentralen Datencenter kann dann die weitere Verarbeitung der annotierten Sensorrohdaten stattfinden.

Durch die Auslagerung des Zugriffspunktes für das zentrale Datencenter in die Kommunikationsmodule der einzelnen Teilsysteme und Komponenten des taktischen Luftverteidigungssystems kann sichergestellt werden, dass der Datenzugriff nicht durch Implementierungsdetails der einzelnen Teilsysteme und Komponenten, beispielsweise bei der Integrierung von Teilsystemen und Komponenten verschiedener Bauart und Hersteller in ein gemeinsames Luftverteidigungssystem, erschwert wird bzw. unter der Kontrolle des zentralen Datencenters und damit des Betreibers des Datencenters verbleibt.

Vorteilhafte Ausgestaltungen und Weiterbildungen ergeben sich aus den weiteren Unteransprüchen sowie aus der Beschreibung unter Bezugnahme auf die Figuren.

Gemäß einigen weiteren Ausführungsformen des erfindungsgemäßen Kommunikationsmoduls kann das Datenaufzeichnungssubsystem einen Datenaufzeichnungsserver und einen mit dem Datenaufzeichnungsserver gekoppelten Datenspeicher aufweisen.

Gemäß einigen Ausführungsformen des erfindungsgemäßen Kommunikationsmoduls kann das Kommunikationsmodul einen ADS-B-Empfänger und/oder ein Sekundärradarabfragegerät aufweisen, welche jeweils mit dem Modulprozessor gekoppelt sind und welche die Identitätsinformationen liefern, die für die Annotation der Sensorrohdaten eines Sensorsystems und die anschließende Speicherung im integrierten Datenaufzeichnungssubsystem des Kommunikationsmoduls des Sensorsystems vorteilhaft sind.

Gemäß einigen Ausführungsformen des Luftverteidigungssystems kann das Luftverteidigungssystem weiterhin ein Peripheriegerätegateway aufweisen, welches ein in das Peripheriegerätegateway integriertes Kommunikationsmodul gemäß dem ersten Aspekt der Erfindung aufweist und welches dazu ausgelegt ist, mit je einem Netzwerkswitch eines oder mehrerer Sensorsysteme über eine Peripheriegeräteschnittstelle verbunden zu werden und über die Peripheriegeräteschnittstelle empfangene Sensorrohdaten in dem integrierten Datenaufzeichnungssubsystem zu annotieren und zu speichern.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### KURZE INHALTSANGABE DER FIGUREN

Die vorliegende Erfindung wird nachfolgend anhand der in den schematischen Figuren angegebenen Ausführungsbeispiele näher erläutert. Es zeigen dabei:
Fig. 1 ein schematisches Blockschaubild eines Kommunikationsmoduls gemäß einer Ausführungsform der Erfindung;
Fig. 2 eine beispielhafte Illustration eines taktischen Luftverteidigungssystems gemäß einer weiteren Ausführungsform der Erfindung, in welcher ein oder mehrere Kommunikationsmodule gemäß Fig. 1 eingesetzt werden können; und
Fig. 3 ein Flussdiagramm eines Verfahrens zur Kommunikation zwischen Komponenten eines taktischen Luftverteidigungssystems gemäß einer weiteren Ausführungsform der Erfindung.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt. Richtungsangebende Terminologie wie etwa "oben", "unten", "links", "rechts", "über", "unter", "horizontal", "vertikal", "vorne", "hinten" und ähnliche Angaben werden lediglich zu erläuternden Zwecken verwendet und dienen nicht der Beschränkung der Allgemeinheit auf spezifische Ausgestaltungen wie in den Figuren gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

### BESCHREIBUNG VON AUSFÜHRUNGSBEISPIELEN

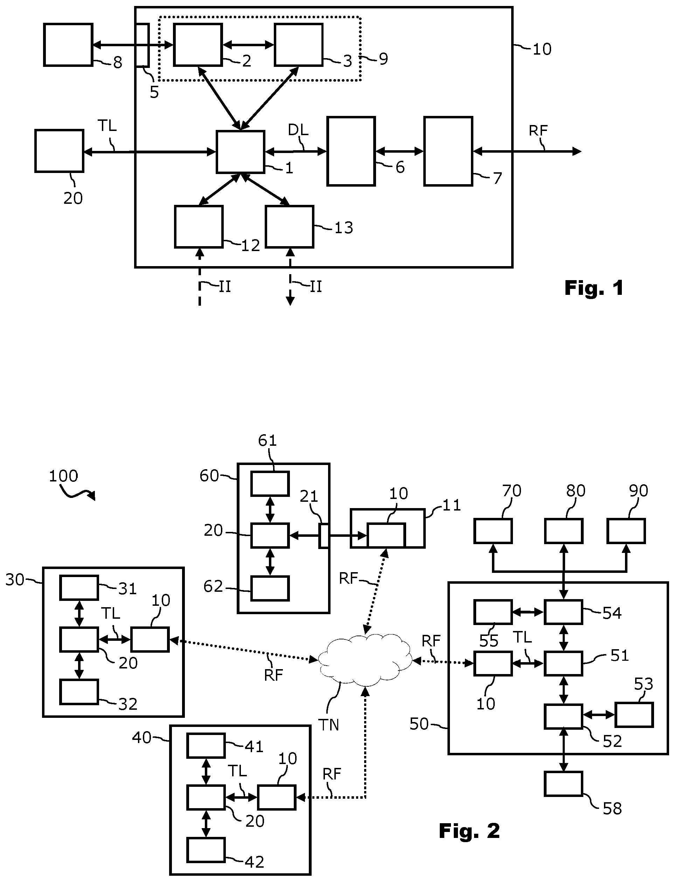

Fig. 1 zeigt ein schematisches Blockschaubild eines Kommunikationsmoduls 10. Das Kommunikationsmodul 10 weist einen Modulprozessor 1 als zentrale Steuerungsinstanz des Kommunikationsmoduls 10 auf. Der Modulprozessor 1 kann beispielsweise ein Mikrocontroller, ein Mikroprozessor, ein ASIC, ein FPGA oder eine andere geeignete Steuervorrichtung aufweisen. Der Modulprozessor 1 kann über eine Datenschnittstelle mit einem außerhalb des Kommunikationsmoduls 10 befindlichen Netzwerkswitch 20 verbunden werden, gegebenenfalls unter Nutzung einer Firewall oder einer ähnlichen Zugriffsbeschränkungsmaßnahme. Der Modulprozessor 1 kann einen bidirektionalen Datenverkehr TL mit dem Netzwerkswitch 20 unterhalten.

Innerhalb des Kommunikationsmoduls 10 kann ein internes Bussystem vorgesehen werden, über welches der Modulprozessor 1 mit den unterschiedlichen Modulelementen des Kommunikationsmoduls 10 kommunizieren kann. Zunächst weist das Kommunikationsmodul 10 eine Kryptierungsvorrichtung 6 und eine Drahtloskommunikationsvorrichtung 7 auf. Die Drahtloskommunikationsvorrichtung 7 ist über die Kryptierungsvorrichtung 6 mit dem Modulprozessor 1 gekoppelt. Die Kryptierungsvorrichtung 6 dient zum Ver- und Entschlüsseln von zu sendenden bzw. zu empfangenden Datensignalen aus einem Drahtlosnetzwerk TN eines taktischen Luftverteidigungssystems 100. Die Drahtloskommunikationsvorrichtung 7 kann zu diesem Zweck drahtlose Datensignale in das Drahtlosnetzwerk TN des taktischen Luftverteidigungssystems 100 senden bzw. aus dem Drahtlosnetzwerk TN des taktischen Luftverteidigungssystems 100 empfangen. Die Drahtloskommunikationsvorrichtung 7 kann beispielsweise Punkt-zu-Punkt- sowie Punkt-zu-Mehrpunkt-Verbindungen aufbauen, OFDM-Verfahren zur drahtlosen Hochgeschwindigkeitsdatenübertragung unterstützen, militärisch relevante Frequenzbänder unterstützen, geringe Latenz für bandbreitenintensive Echtzeitanwendungen aufweisen, eine erweiterte Störerunterdrückung mit automatischer Sendeleistungsregelung und adaptiver Modulation beinhalten, zusammen mit Funkantennen (Sektor-, Richtfunk- oder Stabantenne) betrieben werden, und/oder eine Antennenausrichtungseinheit aufweisen. Die drahtlose Datenkommunikation kann insbesondere paketbasiert erfolgen, beispielsweise in einem Zeitmultiplexübertragungsverfahren (TDMA) oder einem Codemultiplexverfahren (CDMA).

Zusätzlich dazu kann das Kommunikationsmodul 10 einen ADS-B-Empfänger 12 aufweisen, welcher mit dem Modulprozessor 1 gekoppelt ist. Über den ADS-B-Empfänger 12 können Identitätsinformationen II wie Position, Flugnummer, Flugzeugtyp (beispielsweise die ICAO 24 Bit Aircraft Address), Zeitstempel, Geschwindigkeit, Flughöhe, geplante Flugrichtung und andere Flugdaten eines Flugobjekts kontinuierlich gepulst auf einer Kommunikationsfrequenz von 1,09 GHz empfangen werden.

Weiterhin kann das Kommunikationsmodul 10 über ein Sekundärradarabfragegerät 13 (beispielsweise Selective Identification (SIF) bzw. Feature Identification Friend or Foe (IFF)) verfügen, welches mit dem Modulprozessor 1 gekoppelt ist. Diese Sekundärradarabfragegeräte 13 oder Interrogatoren senden ein Radarsignal (Polling) aus, welches aktiv von das Radarsignal empfangenden Transpondern mit entsprechenden Antwortsignalen entsprechend der eingestellten Betriebsart (Mode 1, 2, 3, 5; Mode C, Mode S). beantwortet werden kann. Die Antwortsignale enthalten Identitätsinformationen II wie eine eindeutige Identifikation sowie Zusatzinformationen wie etwa die Position, Flughöhe und Zeitstempel des gepollten Flugobjekts.

Parallel dazu ist der Modulprozessor 1 mit einem Datenaufzeichnungssubsystem 9 verbunden. Das Datenaufzeichnungssubsystem 9 ist in das Kommunikationsmodul 10 integriert und dient zur Annotierung und Speicherung von Sensorrohdaten eines über den Netzwerkswitch 20 angeschlossenen Sensorsystems, wie etwa eines optronischen Sensorsystems 40 und/oder eines Radarsensorsystems 30 des taktischen Luftverteidigungssystems 100.

Die Zuordnung bzw. die Annotation erfolgt dann, wenn die Sensorrohdaten durch ein Sensorikmodul 32, 42, 62 vermessen sind und im Datenaufzeichnungssubsystem 9 vorliegen und die Identität des oder der Flugobjekte, die durch die Sensorrohdaten erfasst wurden, ermittelt wurden und dadurch die Identitätsinformationen II im Datenaufzeichnungssubsystem 9 zur Verfügung stehen.

Nach erfolgter Zuordnung bzw. Annotation werden die Sensorrohdaten samt der zugehörigen Identitätsinformationen II als annotierte Sensorrohdaten im Datenaufzeichnungssubsystem 9 abgespeichert. Die Ermittlung der Identität eines Flugobjektes kann durch den ADS-B Empfänger 12 des Kommunikationsmoduls 10 des vermessenden Sensorsystem 30, 40, 60 oder eines zweiten Sensorsystems 30, 40, 60 oder des Gefechtsstandes 50, aber auch andererseits durch das Sekundärradarabfragegerät 13 des Kommunikationsmoduls 10 des vermessenden Sensorsystem 30, 40, 60 oder eines zweiten Sensorsystems 30, 40, 60 oder des Gefechtsstandes 50 und alternativ durch eine oder mehrere Inferenz-Maschinen 31, 41, 61 eines zweiten Sensorsystems 30, 40, 60 erfolgen. Weiterhin kann die Identität eines Flugobjektes auch von einem übergeordneten zivilen Flugsicherungssystem (ATC) 90 stammen, beispielsweise durch Daten aus ASTRIX Botschaften, deren Dateninhalte über den Gefechtsstand 50 in das jeweilige Kommunikationsmodul 10 gesendet werden können. Andere Identitätsquellen können externe Radarsensoren 80 und übergeordnete Gefechtsstände 70 sein.

Das Datenaufzeichnungssubsystem 9 weist einen Datenaufzeichnungsserver 2 und einen mit dem Datenaufzeichnungsserver 2 gekoppelten Datenspeicher 3 auf. Der Datenaufzeichnungsserver 2 kann zudem über eine Konfigurationsschnittstelle 5 mit einem externen Bediengerät 8, wie etwa einem Laptop oder einem anderen elektronischen Gerät verbunden werden. Über die Konfigurationsschnittstelle 5 kann das Datenaufzeichnungssubsystem 9 hinsichtlich der Speicherungsmodalitäten durch einen Nutzer oder automatisch konfiguriert werden.

Das Kommunikationsmodul 10 stellt ein IP-basiertes Kommunikationsendgerät zur Verfügung, in dem Domänen unterschiedlicher Sicherheitsstufen integriert werden können. Der Modulprozessor 1 kann beispielsweise Anwendungssoftware für NAT-Routing, VolP-Telekommunikationsanlage, Netzwerkmanagement, Statusüberwachung, und Fernwartungszugriff aufweisen. Außerdem kann das Kommunikationsmodul 10 (nicht explizit dargestellt) über einen IT-Sicherheitscontroller mit einer Zeitsynchronisierungseinheit, eine Administratorkonsole, ein Schlüsselgerät, einen Analog-Telefon-Adapter und eine Spannungs- und Stromverteilungseinheit verfügen.

Fig. 2 zeigt eine beispielhafte Illustration eines taktischen Luftverteidigungssystems (LVS) 100. Das LVS 100 weist einen Gefechtsstand 50 sowie ein oder mehrere Sensorsysteme 30, 40, 60 auf, die über ein taktisches (Funk-)Netzwerk TN miteinander in drahtloser Kommunikation stehen.

Jedes der Sensorsysteme 30, 40 und 60 verfügt über einen Netzwerkswitch 20 sowie ein oder mehrere mit dem Netzwerkswitch 20 gekoppelte Sensorikmodule 32, 42 bzw. 62. Die Sensorikmodule 32 können im Falle eines Radarsensorsystems 30 beispielsweise die Gesamtheit aller elektrischen, elektronischen, mechanischen und hydraulischen Modulkomponenten bezeichnen, die für einen Radarsensor relevant sind. Die Sensorikmodule 42 können im Falle eines optronische Sensorsystems 40 beispielsweise die Gesamtheit aller elektrischen, elektronischen, mechanischen und optischen Modulkomponenten bezeichnen, die für einen optronischen Sensor relevant sind. Die Sensorsysteme 30, 40 bzw. 60 können zudem weitere Komponenten umfassen, die die lokale maschinelle Objektidentifikation und -klassifikation durchführen können. So kann ein Sensorsystem 40, 40, 60 eine oder mehrere Inferenz-Maschinen 31, 41, 61 aufweisen, welche von den jeweiligen Sensorikmodulen 32, 42 bzw. 62 mit Sensorrohdaten über den jeweiligen Netzwerkswitch 20 beliefert werden können.

Maschinelles Lernen (ML) als Kerntechnologie der "schwachen" Künstlichen Intelligenz (Kl) bietet eine Alternative zur herkömmlichen Programmierung und bezeichnet einen Teilbereich der Informatik, der sich durch Algorithmen auszeichnet, welche in der Lage sind, sich selbstständig zu verbessern und somit zu lernen. ML liegt meist die Verwendung von künstlichen, neuronalen Netzen (KNN) zu Grunde. ML-Algorithmen benötigen Datensätze für das Training und die Verifikation dieser KNN. Deep Learning (DL), hier überwachtes Lernen, ist ein Teilbereich des ML und bezeichnet ein oder mehrere verknüpfte KNNs mit sehr vielen Schichten beispielsweise Faltungsschichten, Max- oder Average-Pooling-Schichten und vollvermaschte Schichten zwischen der Eingabe- und der Ausgabeschicht. Ein KNN wie beispielsweise ein neuronales Faltungsnetzwerk ("convolutional neural networks", CNN) liefert valide Klassifikations- und Identifizierungsergebnisse, wenn beispielsweise eine konfigurierbare Erkennungsschwelle überschritten worden ist.

Eine Inferenz-Maschine 31, 41, 61 stellt eine konkrete Instanz eines belernten KNN dar und leitet allgemein gesprochen neue Fakten aus einer bestehenden Datenbasis ab, die Ergebnis eines maschinellen Trainings- oder Lernprozesses ist. Während dieses Prozesses werden die Netzparameter, beispielsweise Gewichte und Biase, des die Inferenz-Maschine bildende KNN durch mehrere Trainingsiterationen im zentralen Datencenter des LVS ausgeprägt. Anschließend wird mittels der Verifikationsdaten festgestellt, ob die geforderte Objekterkennungsleistung des KNN erreicht ist, was ggf. weitere Trainings- und Verifikationsiterationen erzwingt. Bei erreichter Leistung werden die so gewonnenen KNN-Netzparameter in die operationellen Inferenz-Maschinen 31, 41, 61 der jeweiligen LVS-Sensoren 30, 40, 60 geladen.

Eine Inferenz-Maschinen 31, 41, 61 verarbeitet die von einem Sensorikmodul 32, 42, 62 erhaltenen Sensorrohdaten sensorspezifisch in Echtzeit oder zumindest echtzeitnah (d.h. mit mindestens einem Bild pro Sekunde) mit immer gleichbleibender Durchlaufzeit. Die dabei inferierten Klassifikations- und Identifizierungsergebnisse werden durch die Inferenz-Maschine 31, 41, 61 an den Netzwerkswitch 20 übergeben, von wo sie zu dem Datenaufzeichnungssubsystem 9 des Kommunikationsmoduls 10 zur Annotation und Speicherung weitergeleitet werden. Dabei stellen die Klassifikations- und Identifizierungsergebnisse lediglich Wahrscheinlichkeiten dar, mit denen ein annotiertes Objekt einer bestimmten Klassifikation bzw. Identifizierung zugeordnet werden kann.

Für die Objektklassifikation und -identifizierung im Luftfahrzeugbereich kann eine Inferenz-Maschine 31, 41, 61 verschiedene Klassen wie etwa zivile Verkehrsflugzeuge, Jagdbomber, militärische Transportflugzeuge, Drohnen, Marschflugkörper oder ähnliches diskriminieren, klassifizieren und identifizieren (CDI). Dabei können je nach Klasse verschiedene Typen identifiziert werden, die im militärischen Kontext relevant sein können. Jeder Klasse bzw. jedem Typ kann mit einer gewissen Erkennungswahrscheinlichkeit eine einsatzabhängige Einstufung zugeordnet werden, wie etwa "Freund", "Feind" oder "unklar".

Die Sensorikmodule 32, 42 und 62 können Sensorrohdaten erfassen, beispielsweise von zu identifizierenden, zu klassifizierenden und zu verfolgenden Flugobjekten im Rahmen einer integrierten Luftüberwachung. Die Sensorrohdaten können an den Netzwerkswitch 20 weitergeleitet werden. Über den Netzwerkswitch 20 können die Sensorrohdaten an ein Kommunikationsmodul 10 und an eine Inferenz-Maschine 31, 41, 61 abgegeben werden.

Das Sensorsystem 60 kann auch ein generisches Sensorsystem darstellen, welches beliebige Sensorikmodule 62 wie etwa Lidar-Sensoren, Radarsensoren, Infrarotsensoren oder beliebige Kombinationen davon umfassen kann. Beispielsweise können Infrarotkameras jeweils in verschiedenen Infrarotbereichen von etwa 0,78 bis 1,4 (NIR) oder 1,4 bis 3 µm (SWIR) oder 3 bis 8 µm (MWIR) oder 8 bis 15 µm (LWIR) eingesetzt werden. Ebenso Videokamera bzw. VIS-Sensoren speziell für große Reichweiten bei Tageslicht und/oder Dämmerung konzipiert mit einer spektralen Empfindlichkeit von 400 bis 760 nm eingesetzt werden. Derartige Videokameras bzw. VIS-Sensoren können einen CCD-Bildverarbeitungschip einsetzen und eine fokale Länge von 50 bis 1550 mm aufweisen.

Das Kommunikationsmodul 10 kann in das Sensorsystem 30, 40 integriert werden, oder über eine Peripheriegeräteschnittstelle 21 mit dem Netzwerkswitch 20 verbunden werden. In letzterem Fall kann das Kommunikationsmodul 10 in ein Peripheriegerätegateway 11 integriert sein. Das Peripheriegerätegateway 11 kann mit je einem Netzwerkswitch 20 eines oder mehrerer Sensorsysteme 60 über eine Peripheriegeräteschnittstelle 21 verbunden werden. Über die Peripheriegeräteschnittstelle 21 empfangenen Sensorrohdaten werden im Peripheriegerätegateway 11 integrierten Kommunikationsmodul 10 gespeichert, dessen Datenaufzeichnungssubsystem 9 dazu ausgelegt ist, die von den ein oder mehreren Sensorikmodulen 62 erfassten Sensorrohdaten zu speichern und zu annotieren.

Beispielsweise kann im Gefechtsstand 50 die Luftlage generiert werden, gespeist aus verschiedenen Quellen: von eigenen Überwachungsradaren, von externen Radarsystemen 80, von einem übergeordneten Gefechtsstand 70 via taktischem Datenlink, von einer zivilen Flugsicherungsinstanz 90 (ATC) und anderen Quellen.

Die Annotationssteuervorrichtung 51 im Gefechtsstand 50 kann einen Zielplot der generierten Luftlage automatisch auswählen, beispielsweise anhand von vorkonfigurierbarer Auswahlkriterien wie etwa Klasse und/oder Typ des Luftobjektes, Entfernungsbereich, Höhenbereich über Grund, Geschwindigkeitsbereich, Richtungssektor, Zeitbereich und Identifizierungsquelle. Die Identifizierungsquelle legt fest, wer die Identitätsinformationen II für den Annotationsvorgang beschaffen soll (erstes Sensorsystem, zweites Sensorsystem, Gefechtsstand, ATC oder eine andere Quelle) und somit ob ein Ziel als kooperativ oder als nicht-kooperativ angenommen wird.

Die Annotationssteuervorrichtung 51 kann den ausgewählten Zielplot dem angeschlossenen Sensorsystem 30, 40, 60, beispielsweise einem Zielverfolgungsradar oder einem optronischen Sensorsystem, mittels einen Zuweisungs-Kommandos und eines zugehörigen Suchvolumens über das taktische Funknetzwerk TN zuweisen. Das ausgewählte Sensorsystem kann das Ziel im vorgegebenen Suchvolumen ermitteln, verfolgen und kann Zielplots (WGS84-Koordinaten oder Azimut/Elevation/Entfernung) erzeugen, die an den Gefechtsstand 50 gesendet werden und in die Luftlagedarstellung einfließen können.

Die Annotationssteuervorrichtung 51 des Gefechtsstandes 50 kann anhand des vorkonfigurierbaren Auswahlkriteriums "Identifizierungsquelle" entscheiden, wie die Identifizierung des ausgewählten Zielplots erfolgen soll, und sendet ein entsprechendes Kommando an die angeschlossenen Sensoren 30, 40, 60 bzw. führt die Identifikation selber aus oder sendet die Identitätsinformationen II, die sie von einen zivilen Flugsicherungssystem (ATC) 90 oder einem übergeordneten Gefechtsstand 70 erhalten hat, an das ersten Sensorsystem.

Die Identifizierung des ausgewählten Zielplots kann durch eigene Mittel des ersten Sensorsystems 30, 40, 60 erfolgen, eben durch den ADS-B Empfänger 12 oder durch das Sekundärradargerät 13 des Kommunikationsmoduls 10 des ersten Sensorsystems 30, 40, 60, wenn es sich um ein kooperatives Ziel handelt und dies so vorkonfiguriert ist.

Eine andere Möglichkeit der Identifizierung des ausgewählten Zielplots können die Identifizierungsmittel eines zweiten Sensorsystems 30, 40, 60 darstellen. Bei einem kooperativen Ziel kann der ADS-B Empfänger 12 oder das Sekundärradargerät 13 des Kommunikationsmoduls 10 des zweiten Sensorsystems 30, 40, 60 bzw. des Gefechtsstandes 50 benutzt werden, wenn es so vorkonfiguriert ist.

Handelt es sich um nicht-kooperative Ziele, so kann die Inferenz-Maschine bzw. die Inferenz-Maschinen 31, 41, 61 des zweiten Sensorsystems 30, 40, 60 die Ermittlung der Identitätsinformationen II vornehmen. Weiterhin können die Identitätsinformationen II von einem Flugsicherungssystem (ATC) oder einem übergeordneten Gefechtsstand 70 mittels der Kommunikationsvorrichtung 54, beispielsweise ein Weitbereichsfunksystem, geliefert werden. Falls dort noch nicht vorhanden, werden die Identitätsinformationen II in den Gefechtsstand 50 geliefert, in der Luftlage dargestellt und zudem durch die Annotationssteuervorrichtung 51 an das erste Sensorsystem 30, 40, 60 weitergeleitet.

Daraufhin kann die Annotationssteuervorrichtung 51 dem Sensorsystem 30, 40, 60 die Vermessung der Sensorrohdaten (beispielsweise Radar-Profilen wie HRR, JEM, HRRP-JEM, VIS/IR-Bildern bzw. Bildsequenzen) kommandieren. Das Sensorikmodul 32, 42, 62 des ersten Sensorsystems 30, 40, 60 kann nun die Messung durchführen und die gemessenen Sensorrohdaten sowie die empfangenen Identitätsinformationen II inklusive des Identifikators und des Standortes des Sensorsystem 30, 40, 60 und der vermessenen Position, Geschwindigkeit und Orientierung des Zieles im Raum an das Datenaufzeichnungssubsystem 9 des eigenen Kommunikationsmoduls 10 weiterleiten.

Der Datenaufzeichnungsserver 2 des Datenaufzeichnungssubsystem 9 kann jetzt die erhaltene Identitätsinformationen II den ebenfalls erhaltenen Sensorrohdaten zuordnen (annotieren) und das so neu entstandene Datum als annotierte Sensorrohdaten im Datenspeicher 3 abspeichern. Der Annotationssteuervorrichtung 51 des Gefechtsstandes 50 kann die erfolgreiche Annotation und Speicherung des ausgewählten Zielplots gemeldet werden.

Im Gefechtsstand 50 kann eine geeignete Mensch-Maschine-Schnittstelle 53 implementiert werden, welche textuelle und/oder symbolische Ausgabesignale zu den erhaltenen Identitätsinformationen II an einer Ausgabeeinheit des Feuerleitenden ausgibt. Auf eine Administratorkonsole 52 im Gefechtsstand 50 kann von außen über ein externes Konfigurations- bzw. Wartungsgerät 58 zugegriffen werden, das dem Bediener die Konfiguration der Auswahlkriterien der Annotationssteuervorrichtung 51 ermöglicht.

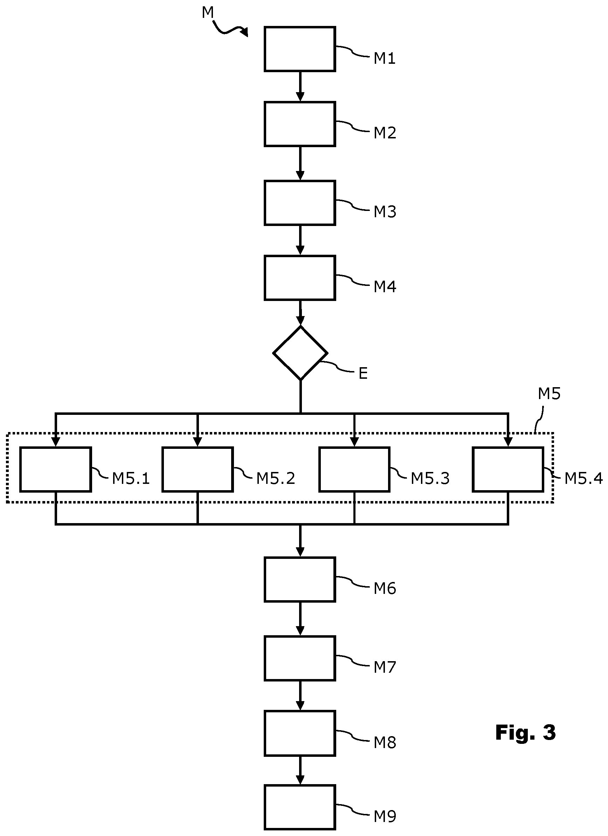

Fig. 3 zeigt ein Flussdiagramm eines Verfahrens M zur Kommunikation zwischen Komponenten eines taktischen Luftverteidigungssystems, wie beispielsweise des Luftverteidigungssystems 100 wie im Zusammenhang mit Fig. 2 dargestellt und erläutert. Das Verfahren M kann beispielsweise unter Nutzung eines Kommunikationsmoduls umgesetzt werden, wie beispielsweise des im Zusammenhang mit Fig. 1 dargestellten und erläuterten Kommunikationsmodul 10.

Das Verfahren M umfasst in einer ersten Stufe M1 die Generierung einer Luftlage im Gefechtsstand 50, gespeist aus verschiedenen Quellen: von eigenen Überwachungsradaren, von externen Radarsystemen 80, von einem übergeordneten Gefechtsstand 70 via taktischem Datenlink, von einer zivilen Flugsicherungsinstanz 90 (ATC) und anderen Quellen.

Die Annotationssteuervorrichtung 51 im Gefechtsstand 50 wählt in einer zweiten Stufe M2 einen Zielplot der generierten Luftlage automatisch aus, beispielsweise anhand von vorkonfigurierbarer Auswahlkriterien wie etwa Klasse und/oder Typ des Luftobjektes, Entfernungsbereich, Höhenbereich über Grund, Geschwindigkeitsbereich, Richtungssektor, Zeitbereich und Identifizierungsquelle.

In der Stufe M3 des Verfahrens weist die Annotationssteuervorrichtung 51 des Gefechtsstandes 50 den ausgewählte Zielplot dem angeschlossenen Sensorsystem 30, 40, 60, einem Zielverfolgungsradar oder einem optronischen Sensorsystem, mittels einen Zuweisungs-Kommandos und eines zugehörigen Suchvolumens über das taktische Funknetzwerk TN zu.

In der vierten Stufe M4 ermittelt das ausgewählte Sensorsystem 30, 40, 60 im vorgegebenen Suchvolumen die Zieldaten, verfolgt das Ziel, erzeugt Zielplots und sendet die Zielplots an den Gefechtsstand 50, wo die erhaltenen Zielplots in die Luftlagedarstellung einfließen.

Im Schritt E entscheidet die Annotationssteuervorrichtung 51 des Gefechtsstandes 50 anhand des vorkonfigurierbaren Auswahlkriteriums "Identifizierungsquelle" wie die Identifizierung des ausgewählten Zielplots erfolgen soll und sendet ein entsprechendes Kommando an die angeschlossenen Sensoren bzw. führt die Identifikation selber aus oder sendet die Identitätsinformationen II, die sie von einen zivilen Flugsicherungssystem (ATC) oder einem übergeordneten Gefechtsstand erhalten hat, an das erste Sensorsystem.

In der Stufe M5.1 erfolgt die Identifizierung des ausgewählten Zielplots durch eigene Mittel des Sensorsystems 30, 40, 60, eben durch den ADS-B Empfänger 12 oder durch das Sekundärradargerät 13 des Kommunikationsmoduls 10 des Sensorsystems 30, 40, 60, wenn es sich um ein kooperatives Ziel handelt.

Die Stufe M5.2 ist eine andere Möglichkeit der Identifizierung des ausgewählten Zielplots durch die Identifizierungsmittel eines zweiten Sensorsystems 30, 40, 60 dar. Bei als kooperativ angenommenen Zielen wird der ADS-B Empfänger 12 oder das Sekundärradargerät 13 des Kommunikationsmoduls 10 des zweiten Sensorsystems 30, 40, 60 bzw. des Gefechtsstandes 50 benutzt.

Die Stufe M5.3 tritt dann in Anwendung, wenn Ziele im Auswahlkriterium "Identifizierungsquelle" als nicht-kooperativ angenommen werden. Die Inferenz-Maschine bzw. die Inferenz-Maschinen 31, 41, 61 des zweiten Sensorsystems 30, 40, 60 nimmt nun die Ermittlung der Identitätsinformationen II vor.

Alternativ werden in Stufe M5.4 die Identitätsinformationen von einem übergeordneten Flugsicherungssystem (ATC) geliefert.

In der Stufe M6 werden die Identitätsinformationen in den Gefechtsstand 50 geliefert, in der Luftlage dargestellt und zudem durch die Annotationssteuervorrichtung 51 an das erste Sensorsystem 30, 40, 60 weitergeleitet.

In der Stufe M7 kommandiert die Annotationssteuervorrichtung 51 dem ersten Sensorsystem 30, 40, 60 die Vermessung der Sensorrohdaten (beispielsweise Radar-Profilen wie HRR, JEM, HRRP-JEM, VIS/IR-Bildern bzw. Bildsequenzen). Das Sensorikmodul 32, 42, 62 des ersten Sensorsystems 30, 40, 60 führt nun die Messung durch und die gemessenen Sensorrohdaten sowie die empfangenen Identitätsinformationen II werden an das Datenaufzeichnungssubsystem 9 des eigenen Kommunikationsmoduls 10 weitergeleitet.

Die Zuordnung bzw. Annotation der ermittelten Identitätsinformationen zu den vermessenen Sensorrohdaten erfolgt in Stufe M8 des Verfahrens M. Der Datenaufzeichnungsserver 2 des Datenaufzeichnungssubsystems 9 ordnet jetzt die erhaltenen Identitätsinformationen II den ebenfalls erhaltenen Sensorrohdaten zu.

In der Stufe M9 wird das in Stufe M8 neu entstandene Datum als annotierte Sensorrohdaten inklusive des Identifikators und des Standortes des ersten Sensorsystems 30, 40, 60 und der durch das erste Sensorsystem 30, 40, 60 vermessenen Position, Geschwindigkeit und Orientierung des Zieles im Raum im Datenspeicher 3 abgespeichert. Der Annotationssteuervorrichtung 51 des Gefechtsstandes 50 wird die erfolgreiche Annotation und Speicherung des ausgewählten Zielplots zurückgemeldet.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

## Patentansprüche

1. Optronisches und/oder Radar-Sensorsystem (30; 40; 60) für ein taktisches Luftverteidigungssystem (100), umfassend:
einen Netzwerkswitch (20);
ein oder mehrere mit dem Netzwerkswitch (20) gekoppelte Sensorikmodule (32; 42; 62), welche dazu ausgelegt sind, Sensorrohdaten zu erfassen und an den Netzwerkswitch (20) weiterzuleiten;
ein oder mehrere mit dem Netzwerkswitch (20) gekoppelte Inferenz-Maschinen (31; 41, 61), welche dazu ausgelegt sind, Objekte in den erfassten Sensorrohdaten zu klassifizieren und zu identifizieren; und
ein Kommunikationsmodul (10), welches mit dem Netzwerkswitch (20) gekoppelt ist, und welches aufweist:
einen Modulprozessor (1), welcher dazu ausgelegt ist, Daten mit einem Netzwerkswitch (20) einer Komponente eines taktischen Luftverteidigungssystems (100) auszutauschen;
eine Drahtloskommunikationsvorrichtung (7), welche mit dem Modulprozessor (1) gekoppelt ist und welche dazu ausgelegt ist, drahtlose Datensignale in ein Drahtlosnetzwerk (TN) des taktischen Luftverteidigungssystems (100) zu senden und aus dem Drahtlosnetzwerk des taktischen Luftverteidigungssystems zu empfangen;
eine Kryptierungsvorrichtung (6), welche zwischen dem Modulprozessor (1) und der Drahtloskommunikationsvorrichtung (7) gekoppelt ist und welche dazu ausgelegt ist, aus dem Drahtlosnetzwerk (TN) des taktischen Luftverteidigungssystems (100) empfangene Datensignale zu entschlüsseln und an den Modulprozessor (1) zu leiten und von dem Modulprozessor (1) empfangene Datensignale zu verschlüsseln und an die Drahtloskommunikationsvorrichtung (7) zum Versenden in das Drahtlosnetzwerk (TN) des taktischen Luftverteidigungssystems (100) zu leiten; **gekennzeichnet durch**
ein in das Kommunikationsmodul (10) integriertes Datenaufzeichnungssubsystem (9), welches mit dem Modulprozessor (1) gekoppelt und dazu ausgelegt ist, den von den ein oder mehreren Sensorikmodulen (32; 42; 62) erfassten Sensorrohdaten Identitätsinformationen (Il) von den Inferenz-Maschinen (31; 41, 61) klassifizierter und identifizierter Objekte für eine Annotation zuzuordnen und die annotierten Sensorrohdaten als Trainings- und Verifikationsdaten für ein überwachtes Belernen der Inferenz-Maschinen (31; 41; 61) zu speichern.

2. Optronisches und/oder Radar-Sensorsystem (30; 40; 60) gemäß dem Anspruch 1, wobei das Datenaufzeichnungssubsystem (9) des Kommunikationsmoduls (10) einen Datenaufzeichnungsserver (2) und einen mit dem Datenaufzeichnungsserver (2) gekoppelten Datenspeicher (3) aufweist.

3. Optronisches und/oder Radar-Sensorsystem (30; 40; 60) gemäß einem der Ansprüche 1 und 2, wobei das Kommunikationsmodul (10) weiterhin einen ADS-B-Empfänger (12) aufweist, welcher mit dem Modulprozessor (1) des Kommunikationsmoduls (10) gekoppelt ist.

4. Optronisches und/oder Radar-Sensorsystem (30; 40; 60) gemäß einem der Ansprüche 1 und 2, wobei das Kommunikationsmodul (10) weiterhin ein Sekundärradarabfragegerät (13) aufweist, welches mit dem Modulprozessor (1) des Kommunikationsmoduls (10) gekoppelt ist.

5. Taktisches Luftverteidigungssystem (100) mit:
einem Gefechtsstand (50); und
einem oder mehreren optronischen und/oder Radar-Sensorsystemen (30; 40; 60) gemäß einem der Ansprüche 1 bis 4.

6. Taktisches Luftverteidigungssystem (100) gemäß Anspruch 5, weiterhin mit:
einem Peripheriegerätegateway (11), welches ein in das Peripheriegerätegateway (11) integriertes Kommunikationsmodul (10) gemäß einem der Ansprüche 1 bis 4 aufweist und welches dazu ausgelegt ist, mit je einem Netzwerkswitch (20) eines oder mehrerer Sensorsysteme (60) über eine Peripheriegeräteschnittstelle (21) verbunden zu werden und über die Peripheriegeräteschnittstelle (21) empfangene und annotierte Sensorrohdaten in dem integrierten Datenaufzeichnungssubsystem (9) zu speichern.

7. Verfahren (M) zur Kommunikation zwischen Komponenten taktischer Luftverteidigungssysteme (100), mit den Schritten:
Generieren (M1) einer Luftlage im Gefechtsstand (50) eines Luftverteidigungssystems (100), gespeist aus einem oder mehreren von Überwachungsradaren, externen Radarsystemen, einem übergeordneten Gefechtsstand (70) via taktischem Datenlink und einer zivilen Flugsicherungsinstanz (ATC, 90);
Auswählen (M2) eines Zielplots der generierten Luftlage anhand einer Vielzahl von vorkonfigurierbarer Auswahlkriterien, welche Klasse und/oder Typ eines Luftobjektes, Entfernungsbereich, Höhenbereich über Grund, Geschwindigkeitsbereich, Richtungssektor und/oder Zeitbereich umfassen;
Zuweisen (M3) des ausgewählten Zielplots an ein erstes Sensorsystem (30; 40; 60) von mindestens zwei Sensorsystemen (30; 40; 60) des Luftverteidigungssystems (100) mittels eines Zuweisungs-Kommandos und eines zugehörigen Suchvolumens über ein taktisches Funknetzwerk (TN) des Luftverteidigungssystems (100), wobei das erste Sensorsystem (30; 40; 60) ein optronisches und/oder ein Radar-Sensorsystem (30; 40; 60) ist;
Ermitteln und Verfolgen (M4) des ausgewählten Zielplots durch das erste Sensorsystem (30; 40; 60) und Übermitteln der Zieldaten des ausgewählten Zielplots an den Gefechtsstand (50);
Ermitteln (M5) von Identitätsinformationen (II) des ausgewählten Zielplots durch das erste Sensorsystem (30; 40; 60), ein zweites Sensorsystem (30; 40; 60), den Gefechtsstand (50), die Flugsicherungsinstanz (ATC, 90) oder den übergeordneten Gefechtsstand (70);
Weiterleiten (M6) der ermittelten Identitätsinformationen (II) an den Gefechtsstand (50) und das erste Sensorsystem (30; 40; 60);
Annotieren (M8), innerhalb des ersten Sensorsystems (30; 40; 60), von erfassten Sensorrohdaten des ersten Sensorsystems (30; 40; 60) durch Zuordnen der ermittelten Identitätsinformationen (II) zu den erfassten Sensorrohdaten; und
Speichern (M9) der annotierten Sensorrohdaten in einem Kommunikationsmodul (10) des ersten Sensorsystems (30; 40; 60) integrierten Datenaufzeichnungssubsystem (9) als Trainings- und Verifikationsdaten für ein überwachtes Belernen von Inferenz-Maschinen (31; 41; 61) des ersten Sensorsystems (30: 40; 60);
wobei durch die in die Sensorsysteme integrierten Inferenz-Maschinen (31; 41, 61) eine Klassifikation und Identifikation von Zielobjekten ermöglicht wird.

8. Verfahren (M) gemäß Anspruch 7, wobei das Ermitteln (M5) der Identitätsinformationen (II) des ausgewählten Zielplots durch einen ADS-B Empfänger (12) oder durch ein Sekundärradargerät (13) des Kommunikationsmoduls (10) des ersten Sensorsystems (30; 40; 60) erfolgt.

9. Verfahren (M) gemäß Anspruch 7, wobei das Ermitteln (M5) der Identitätsinformationen (II) des ausgewählten Zielplots durch einen ADS-B Empfänger (12) oder durch ein Sekundärradargerät (13) des Kommunikationsmoduls (10) des zweiten Sensorsystems (30; 40; 60) erfolgt.

10. Verfahren (M) gemäß Anspruch 7, wobei das Ermitteln (M5) der Identitätsinformationen (II) des ausgewählten Zielplots durch eine oder mehrere Inferenz-Maschinen (31; 41; 61) des zweiten Sensorsystems (30; 40; 60) erfolgt.

11. Verfahren (M) gemäß Anspruch 7, wobei das Ermitteln (M5) der Identitätsinformationen (II) des ausgewählten Zielplots durch ein übergeordnetes Flugsicherungssystem (ATC) (90), durch einen übergeordneten Gefechtsstand (70) oder durch externe Radargeräte (80) erfolgt.

## Claims

1. Optronic and/or radar sensor system (30; 40; 60) for a tactical air defence system (100), comprising:
a network switch (20),
one or more sensor modules (32; 42; 62) coupled to the network switch (20), which are designed to capture raw sensor data and forward it to the network switch (20);
one or more inference engines (31; 41; 61) coupled to the network switch (20), which are designed to classify and identify objects in the captured raw sensor data; and
a communication module (10), which is coupled to the network switch (20), and which has:
a module processor (1), which is designed to exchange data with a network switch (20) of a component of a tactical air defence system (100);
a wireless communication device (7), which is coupled to the module processor (1) and which is designed to send wireless data signals into a wireless network (TN) of the tactical air defence system (100) and receive them from the wireless network of the tactical air defence system; an encryption device (6), which is coupled between the module processor (1) and the wireless communication device (7) and which is designed to decrypt data signals received from the wireless network (TN) of the tactical air defence system (100) and forward them to the module processor (1) and to encrypt data signals received from the module processor (1) and forward them to the wireless communication device (7) for transmission into the wireless network (TN) of the tactical air defence system (100); **characterised by**
a data recording subsystem (9) integrated into the communication module (10), which is coupled to the module processor (1) and is designed to assign identity information (II) of objects classified and identified by the inference engines (31; 41; 61) to the raw sensor data captured by the one or more sensor modules (32; 42; 62) for annotation and to store the annotated raw sensor data as training and verification data for supervised training of the inference engines (31; 41; 61).

2. Optronic and/or radar sensor system (30; 40; 60) according to claim 1, wherein the data recording subsystem (9) of the communication module (10) has a data recording server (20) and a data storage device (3) coupled to the data recording server (2).

3. Optronic and/or radar sensor system (30; 40; 60) according to either one of claim 1 et 2, wherein the communication module (10) further has an ADS-B receiver (12), which is coupled to the module processor (1) of the communication module (10).

4. Optronic and/or radar sensor system (30; 40; 60) according to either one of claims 1 et 2, wherein the communication module (10) further has a secondary radar interrogation device (13), which is coupled to the module processor (1) of the communication module (10).

5. Tactical air defence system (100) having:
a command post (50); and
one or more optronic and/or radar sensor systems (30; 40; 60) according to one of claims 1 to 4.

6. Tactical air defence system (100) according to claim 5, further having:
a peripheral device gateway (11), which has a communication module (10) according to one of claims 1 to 4 integrated into the peripheral device gateway (11) and which is designed to be connected to one network switch (20) of one or more sensor systems (60) via a peripheral device interface (21) and to store raw sensor data received and annotated via the peripheral device interface (11) in the integrated data recording subsystem (9).

7. Method (M) for communication between components of tactical air defence systems (100), having the steps:
generating (M1) an air situation in the command post (50) of an air defence system (100), fed from one or more surveillance radars, external radar systems, a superordinate command post (70) via tactical data link and a civilian air traffic control authority (ATC, 90);
selecting (M2) a target plot of the generated air situation based on a plurality of preconfigurable selection criteria, which comprise class and/or type of an aerial object, distance range, altitude above ground, speed range, direction sector and/or time range;
assigning (M3) the selected target plot to a first sensor system (30; 40; 60) of at least two sensor systems (30; 40; 60) of the air defence system (100) by means of an assignment command and an associated search volume via a tactical radio network (TN) of the air defence system (100), wherein the first sensor system (30; 40; 60) is an optronic and/or radar sensor system (30; 40; 60);
detecting and tracking (M4) the selected target plot by the first sensor system (30; 40; 60) and transmitting the target data of the selected target plot to the command post (50);
determining (M5) identity information (II) of the selected target plot by the first sensor system (30; 40; 60), a second sensor system (30; 40; 60), the command post (50), the air traffic control authority (ATC, 90) or the superordinate command post (70);
forwarding (M6) the determined identity information (II) to the command post (50) and the first sensor system (30; 40; 60);
annotating (M8), within the first sensor system (30; 40; 60), captured raw sensor data of the first sensor system (30; 40; 60) by assigning the determined identity information (II) to the captured raw sensor data; and
storing (M9) the annotated raw sensor data in a data recording subsystem (9) integrated into a communication module (10) of the first sensor system (30; 40; 60) as training and verification data for supervised training of the inference engines (31; 41; 61) of the first sensor system (30; 40; 60);
wherein classification and identification of target objects is enabled by the inference engines (31; 41; 61) integrated into the sensor systems.

8. Method (M) according to claim 7, wherein determining (M5) the identity information (II) of the selected target plot is carried out by an ADS-B receiver (12) or by a secondary radar unit (13) of the communication module (10) of the first sensor system (30; 40; 60).

9. Method (M) according to claim 7, wherein determining (M5) the identity information (II) of the selected target plot is carried out by an ADS-B receiver (12) or by a secondary radar unit (13) of the communication module (10) of the second sensor system (30; 40; 60).

10. Method (M) according to claim 7, wherein determining (M5) the identity information (II) of the selected target plot is carried out by one or more inference engines (31; 41; 61) of the second sensor system (30; 40; 60).

11. Method (M) according to claim 7, wherein determining (M5) the identity information (II) of the selected target plot is carried out by a superordinate air traffic control system (ATC) (90), by a superordinate command post (70) or by external radar units (80).

## Revendications

1. Système de capteurs optroniques et/ou de capteurs radar (30 ; 40 ; 60) pour un système de défense aérienne tactique (100) comprenant :
un commutateur de réseau (20) ;
un ou plusieurs modules de capteurs (32 ; 42 ; 62) couplés au commutateur de réseau (20), qui sont conçus pour acquérir des données brutes de capteurs et les transmettre au commutateur de réseau (20) ;
une ou plusieurs machines à inférence (31 ; 41, 61) couplées au commutateur de réseau (20), qui sont conçues pour classer et identifier des objets dans les données brutes de capteurs acquises ; et
un module de communication (10) qui est couplé au commutateur de réseau (20) et qui comporte :
un processeur de module (1) qui est conçu pour échanger des données avec un commutateur de réseau (20) d'un composant d'un système de défense aérienne tactique (100) ;
un dispositif de communication sans fil (7) qui est couplé au processeur de module (1) et qui est conçu pour envoyer des signaux de données sans fil dans un réseau sans fil (TN) du système de défense aérienne tactique (100) et pour en recevoir du réseau sans fil du système de défense aérienne tactique ;
un dispositif de cryptage (3) qui est couplé entre le processeur de module (1) et le dispositif de communication sans fil (7) et qui est conçu pour déchiffrer des signaux de données reçus du réseau sans fil (TN) du système de défense aérienne tactique (100) et pour les transmettre au processeur de module (1), et pour chiffrer des signaux de données reçus par le processeur de module (1) et pour les transférer vers le dispositif de communication sans fil (7) afin de les envoyer dans le réseau sans fil (TN) du système de défense aérienne tactique (100) ; **caractérisé par**
un sous-système d'enregistrement de données (9) intégré au module de communication (10), qui est couplé au processeur de module (1) et est conçu pour associer aux données brutes de capteurs acquises par ledit un ou plusieurs modules de capteurs (32 ; 42 62) des informations d'identité (II) d'objets classés et identifiés par les machines d'inférence (31 ; 41 ; 61) en vue d'une annotation, et pour stocker les données brutes de capteurs comme des données d'entraînement et de vérification pour un apprentissage supervisé des machines d'inférence (31 ; 41 ; 61).

2. Système de capteurs optroniques et/ou de capteurs radar (30 ; 40 ; 60) selon la revendication 1, dans lequel le sous-système d'enregistrement de données (9) du module de communication (10) comporte un serveur d'enregistrement de données (2) et une mémoire de données (3) couplée au serveur d'enregistrement de données (2).

3. Système de capteurs optroniques et/ou de capteurs radar (30 ; 40 ; 60) selon l'une quelconque des revendications 1 et 2, dans lequel le module de communication (10) comporte en outre un récepteur ADS-B (12) qui est couplé au processeur de module (1) du module de communication (10).

4. Système de capteurs optroniques et/ou de capteurs radar (30 ; 40 ; 60) selon l'une quelconque des revendications 1 et 2, dans lequel le module de communication (10) comporte en outre un appareil d'interrogation radar secondaire (13) qui est couplé au processeur de module (1) du module de communication (10).

5. Système de défense aérienne tactique (100) comportant :
un poste de combat (50) ; et
un ou plusieurs systèmes de capteurs optroniques et/ou de capteurs radar (30 ; 40 ; 60) selon l'une des revendications 1 à 4.

6. Système de défense aérienne tactique (100) selon la revendication 5, comportant en outre :
une passerelle de périphériques (11) qui comporte un module de communication (10) selon l'une des revendications 1 à 4 intégré à la passerelle de périphériques (11) et qui est conçu pour être connecté chaque fois à un commutateur de réseau (20) d'un ou plusieurs systèmes de capteurs (60) via une interface de périphériques (21) et pour stocker des données brutes de capteurs reçues et annotées via l'interface de périphériques (21) dans le sous-système d'enregistrement de données (9) intégré.

7. Procédé (M) de communication entre composants de systèmes de défense aérienne tactique (100), comportant les étapes consistant à :
générer (M1) une position aérienne dans le poste de combat (50) d'un système de défense aérienne (100), alimentée à partir d'un ou plusieurs radars de surveillance, des systèmes radar externes, un poste de combat de niveau supérieur (70) via une liaison de données tactique et une instance de contrôle du trafic aérien (ATC, 90) ;
sélectionner (M2) un tracé cible de la position aérienne générée au moyen d'une pluralité de critères de sélection préconfigurables qui comprennent une classe et/ou un type d'un objet aérien, une plage de distances, une plage d'altitudes au-dessus du sol, une plage de vitesses, un secteur directionnel et/ou un intervalle de temps ;
associer (M3) le tracé cible sélectionné à un premier système de capteurs (30 ; 40 ; 60) d'au moins deux systèmes de capteurs (30 ; 40 ; 60) du système de défense aérienne (100) au moyen d'une commande d'association et d'un volume de recherche associé via un réseau radio tactique (TN) du système de défense aérienne (100), dans lequel le premier système de capteurs (30; 40; 60) est un système de capteurs optroniques et/ou de capteurs radar (30 ; 40 ; 60) ;
déterminer et suivre (M4) le tracé cible sélectionné par le premier système de capteurs (30 ; 40 ; 60) et transmettre les données de cible du tracé cible sélectionné au poste de combat (50) ;
déterminer (M5) des informations d'identité (II) du tracé cible sélectionné par le premier système de capteurs (30 ; 40 ; 60), un second système de capteurs (30 ; 40 ; 60), le poste de combat (50), l'instance de contrôle du trafic aérien (ATC, 90) ou le poste de combat de niveau supérieur (70) ;
transférer (M6) les informations d'identité (II) déterminées au poste de combat (50) et au premier système de capteurs (30 ; 40 ; 60) ;
annoter (M8), dans le premier système de capteurs (30 ; 40 ; 60), des données brutes de capteurs acquises du premier système de capteurs (30 ; 40 ; 60) en associant les informations d'identité (II) déterminées aux données brutes de capteurs acquises ; et
stocker (M9) les données brutes de capteurs annotées dans un sous-système d'enregistrement de données (9) intégré à un module de communication (10) du premier système de capteurs (30 ; 40 ; 60), comme des données d'entraînement et de vérification pour un apprentissage supervisé de machines à inférence (31 ; 41 ; 61) du premier système de capteurs (30 ; 40 ; 60) ;
dans lequel les machines à inférence (31 ; 41 ; 61) intégrées aux systèmes de capteurs permettent une classification et une identification d'objets cibles.

8. Procédé (M) selon la revendication 7, dans lequel la détermination (M5) des informations d'identité (II) du tracé cible sélectionné est effectuée par un récepteur ADS-B (12) ou par un appareil radar secondaire (13) du module de communication (10) du premier système de capteurs (30 ; 40 ; 60).

9. Procédé (M) selon la revendication 7, dans lequel la détermination (M5) des informations d'identité (II) du tracé cible sélectionné est effectuée par un récepteur ADS-B (12) ou par un appareil radar secondaire (13) du module de communication (10) du second système de capteurs (30 ; 40 ; 60).

10. Procédé (M) selon la revendication 7, dans lequel la détermination (M5) des informations d'identité (II) du tracé cible sélectionné est effectuée par une ou plusieurs machines à inférence (31 ; 41 ; 61) du second système de capteurs (30 ; 40 ; 60).

11. Procédé (M) selon la revendication 7, dans lequel la détermination (M5) des informations d'identité (II) du tracé cible sélectionné est effectuée par un système de contrôle du trafic aérien (ATC) de niveau supérieur (90), par un poste de combat (70) de niveau supérieur ou par des appareils radar externes (80).
